# EUROPEAN PATENT APPLICATION

(11) **EP 4 693 672 A1**
(43) Date of publication of application: **11.02.2026**
(21) Application number: 24900981.2
(22) Date of filing: 29.11.2024
(51) Int. Cl.: H01M 50/30, H01M 50/325, F16K 17/18

(54) **RELIEF VALVE AND BATTERY PACK INCLUDING SAME**

(30) Priority: 06.12.2023 KR 20230175078
(71) Applicant: LG Energy Solution, Ltd., Seoul 07335 (KR)
(72) Inventor: SON, Hong Se, Daejeon 34122 (KR)
(74) Representative: Plasseraud IP
(86) International application number: PCT/KR2024/019282
(87) International publication number: WO 2025/121795

(57) **Abstract**

The present technology provides a battery pack including a pack housing with an inner space in which battery cells are accommodated and a relief valve mounted in the pack housing, in which the relief valve includes: a fixing frame mounted in the pack housing and including a venting passage for communication with the inner space of the pack housing; a valve cover configured to be moved between an open position and a closed position according to pressure of the inner space of the pack housing, in which the venting passage of the fixing frame is open with respect to an outer space of the pack housing at the open position and is closed with respect to the outer space at the closed position; and a mesh plate coupled to the valve cover to be moved together with the valve cover and including a plurality of venting holes, and when the valve cover is at the open position, the inner space of the pack housing communicates with the outer space through the plurality of venting holes of the mesh plate.

## Description

### [Technical Field]

The present invention relates to a relief valve and a battery pack including the same.

This application claims the benefit of priority based on Korean Patent Application No. 10-2023-0175078, filed on December 6, 2023, and the entire content of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the safety of secondary batteries is increasing. A driver's life may be in danger when an accident such as fire occurs in a secondary battery used for mobility and thus research on technology for enhancing the safety of secondary batteries is indispensable.

### [Disclosure]

### [Technical Problem]

The present invention is directed to providing a relief valve and a battery pack including the same.

### [Technical Solution]

An aspect of the present invention provides a battery pack including a pack housing with an inner space in which battery cells are accommodated and a relief valve mounted in the pack housing, in which the relief valve includes: a fixing frame mounted in the pack housing and including a venting passage for communication with the inner space of the pack housing; a valve cover configured to be moved between an open position and a closed position according to pressure of the inner space of the pack housing, in which the venting passage of the fixing frame is open with respect to an outer space of the pack housing at the open position and is closed with respect to the outer space at the closed position; and a mesh plate coupled to the valve cover to be moved together with the valve cover and including a plurality of venting holes, and when the valve cover is at the open position, the inner space of the pack housing communicates with the outer space through the plurality of venting holes of the mesh plate.

In example embodiments, a width of each of the plurality of venting holes may be greater than or equal to 0.01 mm and less than 0.61 mm.

In example embodiments, the mesh plate may extend continuously along perimeter of the valve cover.

In example embodiments, the mesh plate may be surrounded by a perimeter wall of the fixing frame so as not to be exposed to the outer space when the valve cover is at the closed position, and may protrudes from the fixing frame to be exposed to the outer space when the valve cover at the open position.

In example embodiments, the relief valve may further include a spring configured to provide a restoring force to the valve cover in a direction toward the closed position from the open position.

In example embodiments, the valve cover may include a moving rod around which the spring is wound.

In example embodiments, the fixing frame may include a ring-shaped body fixed to the pack housing, and a support structure configured to support a side of the moving rod and extending toward the moving rod from the ring-shaped body.

In example embodiments, the spring may be provided between an engaging protrusion on an end of the moving rod and the support structure.

In example embodiments, the valve cover may be linearly moved between the closed position and the open position.

An aspect of the present invention provides a relief valve including: a fixing frame with a venting passage; a valve cover movably mounted on the fixing frame and configured to be moved between an open position and a closed position, in which the venting passage of the fixing frame is open at the open position and is closed at the closed position; and a mesh plate coupled to the valve cover to be moved together with the valve cover and including a plurality of venting holes, and when the valve cover is at the open position, the venting passage of the fixing frame communicates with an outer space through the plurality of venting holes of the mesh plate.

In example embodiments, a width of each of the plurality of venting holes may be greater than or equal to 0.01 mm and less than 0.61 mm.

In example embodiments, the relief valve may further include a spring configured to provide a restoring force to the valve cover in a direction toward the closed position from the open position, the valve cover may include a blocking plate covering the venting passage of the fixing frame and a moving rod connected to the blocking plate, and the spring may be wound around the moving rod.

In example embodiments, the mesh plate may be in the form of a tube continuously extending along perimeter of the blocking plate.

In example embodiments, the fixing frame may include a ring-shaped body with a hollow portion, and a support structure configured to support a side of the moving rod and extending toward the moving rod from the ring-shaped body, one end of the spring may be supported by an engaging protrusion on the moving rod, and another end of the spring may be supported by the support structure.

In example embodiments, the ring-shaped body may include a perimeter wall, and the perimeter wall of the ring-shaped body may surround the mesh plate when the valve cover is at the closed position.

### [Advantageous Effects]

According to example embodiments of the present invention, a mesh plate of a relief valve is provided with a venting hole with dimensions sufficient to block the discharge of spark particles and thus spark particles generated in a battery pack can be prevented from escaping into an outer space. An ignition source that is one of three elements of flame can be removed to suppress generation of flames in the periphery of the battery pack and improve the safety of the battery pack and a device including the battery pack.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a relief valve in a closed state according to example embodiments of the present invention.
FIG. 2 is a perspective view of a relief valve in an open state according to example embodiments of the present invention.
FIG. 3 is a cross-sectional perspective view of a relief valve in the open state according to example embodiments of the present invention.
FIG. 4 is a perspective view of a battery pack according to example embodiments of the present invention.
FIG. 5 is a schematic cross-sectional view of a battery pack in which a relief valve is in the closed state.
FIG. 6 is a schematic cross-sectional view of a battery pack in which a relief valve is in the open state.
FIG. 7 is a cross-sectional view of a mesh plate of a battery pack.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

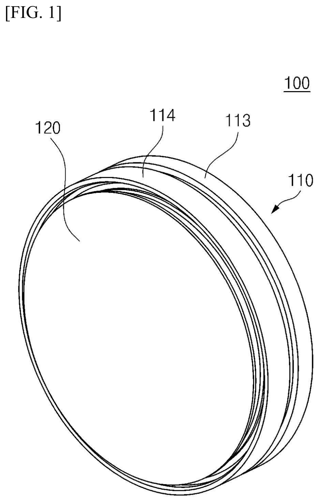

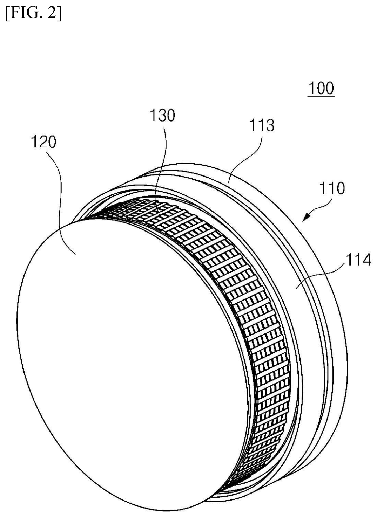

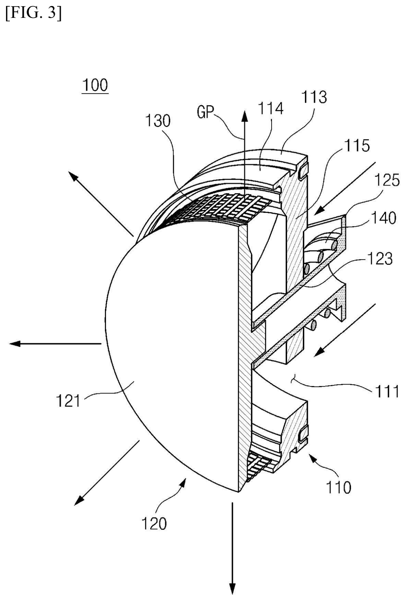

FIGS. 1 to 3 are diagrams illustrating a relief valve 100 according to example embodiments of the present invention. FIG. 1 is a perspective view of the relief valve 100 in a closed state. FIG. 2 is a perspective view of the relief valve 100 in an open state. FIG. 3 is a cross-sectional perspective view of the relief valve 100 in the open state.

Referring to FIGS. 1 to 3, the relief valve 100 may be mounted in a housing with a closed inner space. The relief valve 100 may be configured to be switched between the closed state and the open state according to pressure of the inner space of the housing.

In the closed state of the relief valve 100, the relief valve 100 may close a passage between the inner space of the housing and the outside or an outer space of the housing to block the flow of a gas between the outer space and the inner space of the housing. In the open state of the relief valve 100, the relief valve 100 may open the passage between the outer space and the inner space of the housing to allow the flow of a gas between the outer space and the inner space of the housing.

The relief valve 100 may be in the closed state when the pressure of the inner space of the housing is less than or equal to a preset reference value, and may be in the open state when the pressure of the inner space of the housing is greater than the preset reference value. When the pressure of the inner space of the housing is greater than the preset reference value, the relief valve 100 may be in the open state and a gas in the inner space of the housing may be discharged to the outer space to reduce the pressure of the inner space of the housing. When the pressure of the inner space of the housing is reduced to the preset reference value or less, the relief valve 100 may be switched from the open state to the closed state.

The relief valve 100 may include a fixing frame 110, a valve cover 120, a mesh plate 130, and a spring 140.

The fixing frame 110 may be mounted and fixed to the housing. The fixing frame 110 may be provided with a venting passage 111 in communication with the inner space of the housing. The venting passage 111 of the fixing frame 110 may allow the inner space of the housing to communicate with the outer space.

The fixing frame 110 may include a ring-shaped body 113 coupled to the housing and a support structure 115 extending inward from the ring-shaped body 113. The venting passage 111 of the fixing frame 110 may include a hollow portion of the ring-shaped body 113.

The valve cover 120 may be switched between a closed position and an open position according to pressure of the inner space of the housing. In the closed state of the relief valve 100, the valve cover 120 may be at the closed position. In the open state of the relief valve 100, the valve cover 120 may be at the open position. The valve cover 120 may be linearly moved between the open position and the closed position.

When the valve cover 120 is at the closed position, the valve cover 120 may close the venting passage 111 of the fixing frame 110 with respect to the outer space to prevent communication between the venting passage 111 of the fixing frame 110 and the outer space. When the valve cover 120 is at the closed position, the flow of a gas between the inner space of the housing and the outer space may be blocked.

When the valve cover 120 is at the open position, the valve cover 120 may open the venting passage 111 of the fixing frame 110 with respect to the outer space to allow the venting passage 111 of the fixing frame 110 to communicate with the outer space. When the valve cover 120 is at the open position, a gas may flow from the inner space of the housing to the outer space through the venting passage 111 of the fixing frame 110.

The valve cover 120 may include a blocking plate 121 configured to cover and close the venting passage 111 of the fixing frame 110, and a moving rod 123 coupled to the blocking plate 121. The support structure 115 may extend from the ring-shaped body 113 toward the moving rod 123 and support a side of the moving rod 123 so that the moving rod 123 may move linearly along a predetermined path.

The mesh plate 130 may be coupled to the valve cover 120 and moved together with the valve cover 120 when the valve cover 120 is moved. The mesh plate 130 may be coupled to the perimeter of the valve cover 120. More specifically, the mesh plate 130 may be coupled to the perimeter of the blocking plate 121 of the valve cover 120 and have a ring shape or a tube shape that continuously extends along the perimeter of the blocking plate 121 of the valve cover 120.

When the valve cover 120 is at the closed position, the mesh plate 130 may be surrounded by a perimeter wall 114 of the fixing frame 110 so as not to be exposed to the outer space. When the valve cover 120 is at the open position, the mesh plate 130 may protrude from the fixing frame 110 to be exposed to the outer space.

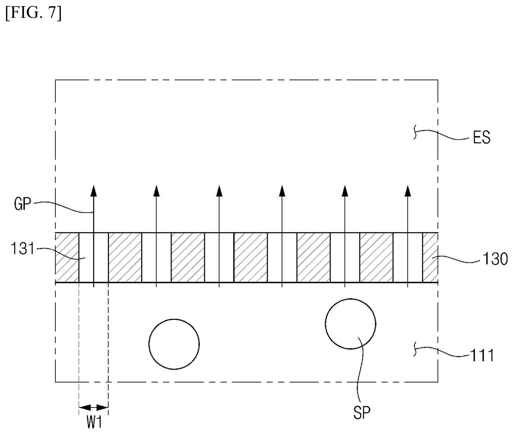

The mesh plate 130 may be provided with a plurality of venting holes 131 of FIG. 7. The plurality of venting holes 131 may be regularly arranged in the mesh plate 130. Each of the venting holes 131 may have a circular shape or a polygonal shape. When the valve cover 120 is switched from the closed position to the open position, the mesh plate 130 may protrude from the fixing frame 110 to be positioned between the venting passage 111 of the fixing frame 110 and the outer space. When the valve cover 120 is at the open position, the venting passage 111 of the fixing frame 110 may communicate with the outer space through the plurality of venting holes 131 of the mesh plate 130. As shown in FIG. 3, a venting gas in the housing flows towards the outer space through the venting passage 111 of the fixing frame 110 and the venting holes 131 of the mesh plate 130, and a flow path GP of the venting gas may be substantially perpendicular to a moving direction of the valve cover 120.

The spring 140 may provide a restoring force to the valve cover 120 in a direction from the open position to the closed position of the valve cover 120. For example, the spring 140 may be a coil spring wound around the moving rod 123. The spring 140 may be provided between the support structure 115 of the fixing frame 110 and an engaging protrusion 125 of the moving rod 123 on an end of the moving rod 123. One end of the spring 140 may be supported by the engaging protrusion 125 of the moving rod 123, and another end thereof may be supported by the support structure 115. When pressure of the inner space of the housing is less than or equal to a preset reference value, the valve cover 120 may be elastically supported by the spring 140 to be fixed at the closed position. When the pressure of the inner space of the housing is greater than the preset reference value, the valve cover 120 may be gradually moved from the closed position toward the open position.

### (Second Embodiment)

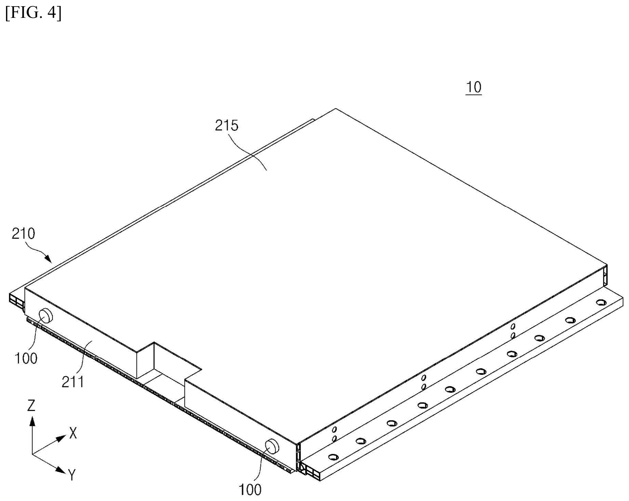

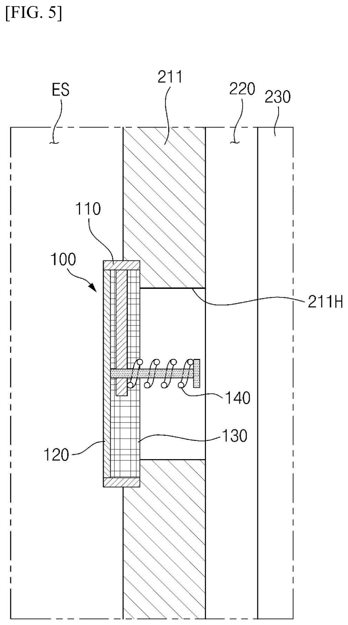

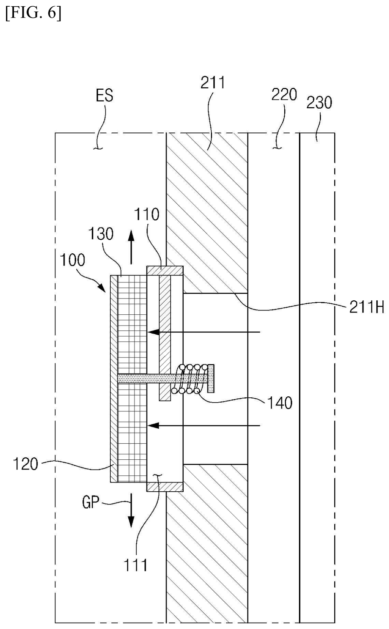

FIGS. 4 to 7 are diagrams illustrating a battery pack 10 according to example embodiments of the present invention. FIG. 4 is a perspective view of the battery pack. FIG. 5 is a schematic cross-sectional view of the battery pack 10 in which a relief valve 100 is in the closed state. FIG. 6 is a schematic cross-sectional view of the battery pack 10 in which the relief valve 100 is in the open state. FIG. 7 is a cross-sectional view of a mesh plate 130 of the battery pack 10.

Referring to FIGS. 4 to 7, the battery pack 10 may include a pack housing 210, a battery cell assembly 230, and a relief valve 100. For the relief valve 100, FIGS. 1 to 3 will be also referred.

The pack housing 210 may provide a closed inner space 220. The pack housing 210 may include a lower housing 211 defining the inner space 220 and a pack lid 215 coupled to the lower housing 211 to cover the inner space 220 of the lower housing 211. The lower housing 211 may include a bottom plate and side walls connected to edges of the bottom plate.

The battery cell assembly 230 may be provided in the inner space 220 of the pack housing 210. The battery cell assembly 230 may correspond to a battery module or a cell-to-pack structure. The battery pack 10 may include one or more battery cell assemblies 230. In example embodiments, the battery pack 10 may include a plurality of battery cell assemblies 230 arranged in a first horizontal direction (e.g., an X-axis direction) and a second horizontal direction (e.g., a Y-axis direction).

The battery cell assembly 230 may include a plurality of battery cells. Each of the battery cells is a basic unit of a lithium ion battery, i.e., a secondary battery. Each of the battery cells may include an electrode assembly, an electrolyte, and a cell case. The electrode assembly in the cell case may include a positive electrode, a negative electrode, and a separator between the positive electrode and the negative electrode. The electrode assembly may be a jelly-roll type electrode assembly or a stack type electrode assembly according to a form of assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

The battery cells may be connected in series and/or in parallel. For example, the battery cells may be connected to each other in series. For example, the battery cells may be connected to each other in parallel. For example, when a set of two or more battery cells connected in parallel is defined as a bank, one bank including two or more battery cells connected in parallel and another bank including two or more battery cells connected in parallel may be connected in series.

Each of the battery cells may be a pouch type battery cell, a cylindrical battery cell, or a prismatic battery cell. An electrode assembly of the pouch type battery cell is embedded in a pouch cell case including an aluminum laminate sheet. An electrode assembly of the cylindrical battery cell is embedded in a cylindrical metal can. An electrode assembly of the prismatic battery cell is embedded in a prismatic metal can.

The relief valve 100 may be installed in the pack housing 210. In example embodiments, the lower housing 211 is provided with a through-hole 211H communicating with the inner space 220 of the pack housing 210, and the relief valve 100 may be installed in the through-hole 211H in a side wall of the lower housing 211.

The relief valve 100 may be switched between an open position at which the venting passage 111 of the fixing frame 110 is open with respect to an outer space ES outside the pack housing 210 and a closed position at which the venting passage 111 of the fixed frame 110 is closed with respect to the outer space ES according to pressure of the inner space 220 of the pack housing 210. When the pressure of the inner space 220 of the pack housing 210 is less than or equal to a preset reference value, the valve cover 120 may be positioned at the closed position while being elastically supported by the spring 140, the venting passage 111 of the fixing frame 110 may not communicate with the outer space ES, and the flow of a gas between the inner space 220 of the pack housing 210 and the outer space ES may be blocked. When the pressure of the inner space 220 of the pack housing 210 is greater than the preset reference value, the valve cover 120 may be moved from the closed position toward the open position, the venting passage 111 of the fixing frame 110 may communicate with the outer space ES, and a gas in the inner space 220 of the pack housing 210 may be discharged to the outer space ES through the venting passage 111 of the fixing frame 110. When the pressure of the inner space 220 of the pack housing 210 decreases to the preset reference value or less, the valve cover 120 is fixed at the closed position due to the resilience of the spring 140.

When the valve cover 120 is at the open position, the mesh plate 130 may be positioned between the venting passage 111 of the fixing frame 110 and the outer space ES, and the inner space 220 of the pack housing 210 may communicate with the outer space ES through the plurality of venting holes 131 of the mesh plate 130 and the venting passage 111 of the fixing frame 110. When the valve cover 120 is at the open position, a gas in the inner space 220 of the pack housing 210 may be discharged to the outer space ES through the venting passage 111 of the fixing frame 110 and the plurality of venting holes 131 of the mesh plate 130. When the valve cover 120 is at the closed position, the mesh plate 130 is surrounded by the perimeter wall 114 of the fixing frame 110 so as not to be exposed to the external space ES.

In general, spark particles SP generated at a cell level due to a short circuit between a positive electrode and a negative electrode are an ignition source that causes flames. Specifically, oxygen, a venting gas generated by vaporization of an electrolyte, and the spark particles SP are three elements of flame. When the spark particles SP and the venting gas that are generated in the battery pack 10 are discharged to the outer space ES, the spark particles SP and the venting gas may come into contact with oxygen in the outer space ES, thus causing flames to be generated in the periphery of the battery pack 10.

In example embodiments, a width W1 of the venting hole 131 may be less than 0.61 mm. Here, the width W1 of the venting hole 131 may be understood as a maximum width or diameter of the venting hole 131. When the width W1 of the venting hole 131 is 0.61 mm or more, the spark particles SP generated at the cell level due to the short circuit between the positive electrode and the negative electrode may escape into to the outer space ES, and the spark particles SP may come into contact with a venting gas and oxygen, thus causing flames to be generated in the periphery of the battery pack 10. Therefore, the width W1 of the venting hole 131 may be set to be less than 0.61 mm to block the spark particles SP in the battery pack 10 from escaping into the outer space ES through the relief valve 100, so that the spark particles SP may stay in the pack housing 210. When the spark particles SP are blocked from escaping into the outer space ES, the spark particles SP are prevented from coming into contact with oxygen, thereby suppressing generation of flames in the periphery of the battery pack 10.

In example embodiments, the width W1 of the venting hole 131 may be 0.01 mm or more. When the width W1 of the venting hole 131 is less than 0.01 mm, a rate of gas emission through the venting hole 131 is extremely low and thus exhaust efficiency when using the relief valve 100 may decrease.

In example embodiments, the width W1 of the venting hole 131 may be 0.01 mm or more and less than 0.61 mm. Alternatively, the width W1 of the venting hole 131 may be in a range between 0.01 mm and 0.59 mm, a range between 0.01 mm and 0.57 mm, a range between 0.01 mm and 0.55 mm, a range between 0.01 mm and 0.53 mm, a range between 0.01 mm and 0.51 mm, a range between 0.01 mm and 0.49 mm, a range between 0.01 mm and 0.47 mm, a range between 0.01 mm and 0.45 mm, or a range between 0.01 mm and 0.43 mm.

According to example embodiments of the present invention, the mesh plate 130 of the relief valve 100 is provided with the venting hole 131 with dimensions sufficient to block the discharge of the spark particles SP, thereby preventing the spark particles SP generated in the battery pack 10 from escaping into the outer space ES. An ignition source that is one of the three elements of flame can be removed to suppress generation of flames in the periphery of the battery pack 10 and improve the safety of the battery pack 10 and a device including the battery pack 10.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a pack housing with an inner space in which battery cells are accommodated; and
a relief valve mounted in the pack housing,
wherein the relief valve comprises:
a fixing frame mounted in the pack housing and including a venting passage for communication with the inner space of the pack housing;
a valve cover configured to be moved between an open position and a closed position according to pressure of the inner space of the pack housing, wherein the venting passage of the fixing frame is open with respect to an outer space of the pack housing at the open position and is closed with respect to the outer space at the closed position; and
a mesh plate coupled to the valve cover to be moved together with the valve cover, and including a plurality of venting holes, and
when the valve cover is at the open position, the inner space of the pack housing communicates with the outer space through the plurality of venting holes of the mesh plate.

2. The battery pack of claim 1, wherein
a width of each of the plurality of venting holes is greater than or equal to 0.01 mm and less than 0.61 mm.

3. The battery pack of claim 1, wherein
the mesh plate extends continuously along perimeter of the valve cover.

4. The battery pack of claim 1, wherein,
when the valve cover is at the closed position, the mesh plate is surrounded by a perimeter wall of the fixing frame so as not to be exposed to the outer space, and
when the valve cover at the open position, the mesh plate protrudes from the fixing frame to be exposed to the outer space.

5. The battery pack of claim 1, wherein
the relief valve further comprises a spring configured to provide a restoring force to the valve cover in a direction toward the closed position from the open position.

6. The battery pack of claim 5, wherein
the valve cover comprises a moving rod around which the spring is wound.

7. The battery pack of claim 6, wherein
the fixing frame comprises:
a ring-shaped body fixed to the pack housing; and
a support structure configured to support a side of the moving rod, and extending toward the moving rod from the ring-shaped body.

8. The battery pack of claim 7, wherein
the spring is provided between an engaging protrusion on an end of the moving rod and the support structure.

9. The battery pack of claim 1, wherein
the valve cover is linearly moved between the closed position and the open position.

10. A relief valve comprising:
a fixing frame with a venting passage;
a valve cover movably mounted on the fixing frame and configured to be moved between an open position and a closed position, wherein the venting passage of the fixing frame is open at the open position and is closed at the closed position; and
a mesh plate coupled to the valve cover to be moved together with the valve cover, and including a plurality of venting holes,
wherein when the valve cover is at the open position, the venting passage of the fixing frame communicates with an outer space through the plurality of venting holes of the mesh plate.

11. The relief valve of claim 10, wherein
a width of each of the plurality of venting holes is greater than or equal to 0.01 mm and less than 0.61 mm.

12. The relief valve of claim 10, further comprising
a spring configured to provide a restoring force to the valve cover in a direction toward the closed position from the open position, and
wherein the valve cover comprises a blocking plate covering the venting passage of the fixing frame and a moving rod connected to the blocking plate, and
the spring is wound around the moving rod.

13. The relief valve of claim 12, wherein
the mesh plate is in the form of a tube continuously extending along perimeter of the blocking plate.

14. The relief valve of claim 13, wherein
the fixing frame comprises:
a ring-shaped body with a hollow portion; and
a support structure configured to support a side of the moving rod, and extending toward the moving rod from the ring-shaped body,
wherein one end of the spring is supported by an engaging protrusion on the moving rod, and another end of the spring is supported by the support structure.

15. The relief valve of claim 14, wherein
the ring-shaped body comprises a perimeter wall,
wherein when the valve cover is at the closed position, the perimeter wall of the ring-shaped body surrounds the mesh plate.
